# EUROPÄISCHE PATENTANMELDUNG

(11) **EP 3 053 903 A1**
(43) Veröffentlichungstag der Anmeldung: **10.08.2016**
(21) Anmeldenummer: 16154373.1
(22) Anmeldetag: 05.02.2016
(51) Int. Cl.: C05B 13/00, B09B 3/00, B01D 61/42

(54) **VERFAHREN UND VORRICHTUNG ZUR GEWINNUNG VON PHOSPHATHALTIGEN VERBIN- DUNGEN AUS ASCHE**

(30) Priorität: 09.02.2015 DE 102015101795
(71) Anmelder: Justus-Liebig-Universität Gießen, 35390 Gießen (DE); Technische Hochschule Mittelhessen, 35390 Giessen (DE)
(72) Erfinder: STEFFENS, Dietrich, 35428 Langgöns (DE); ALTERSEN, Reinhold, 35325 Mücke (DE); KOCH, Christian, 59939 Olsberg-Wiemeringhausen (DE); KONRADI, Simon, 35410 Hungen (DE); LINGENBERG, Leon, 35510 Butzbach (DE); SRECKENMESSER, Daniel, 35633 Lahnau-Atzbach (DE)
(74) Vertreter: Stumpf, Peter

(57) **Zusammenfassung**

Gegenstand der Erfindung ist ein verbessertes Verfahren sowie eine Vorrichtung zur Gewinnung von phosphat-haltigen Verbindungen aus Asche umfassend wenigstens die folgenden Schritte: Zumindest teilweises Lösen der Asche mittels eines Aufschlussmittels um eine Suspension zu erhalten, Trennung der Suspension aus Schritt i) in eine flüssige Phase und in einen festen Rückstand, Separation der Ionen der flüssigen Phase aus Schritt ii) nach ihrer Ladung mittels ElektroUltrafiltration, wobei ein Anodenfiltrat isoliert wird, Fällung des Anodenfiltrats aus Schritt iii) mit einem Fällungsmittel, wobei die phosphat-haltigen Verbindungen ausfallen.

## Beschreibung

Die vorliegende Erfindung betrifft ein Verfahren sowie eine Vorrichtung zur Gewinnung von phosphat-haltigen Verbindungen aus Asche.

### Stand der Technik

Phosphorverbindungen sind für alle Lebewesen essenziell und bei Aufbau und Funktion der Organismen in zentralen Bereichen beteiligt. Auf natürlichem Wege gelangt Phosphor einerseits über die Apatit-Verwitterung in den Boden oder aber aus zersetzter organischer Materie. Durch Düngung erhöht der Mensch aktiv den Phosphorgehalt im Boden über die Einbringung von phosphathaltigen Düngern. Ungefähr 90 Prozent der globalen Phosphorproduktion findet als Dünger in der Landwirtschaft Verwendung. Phosphor ist somit von enormer Wichtigkeit für die heute stark industrialisierte Produktion landwirtschaftlicher Güter. Allerdings werden die bisherigen Phosphor-Abbaustätten die hohe, sogar weiterhin, steigende Nachfrage nicht unendlich lange, abdecken können. Deshalb ist die Rückgewinnung von Phosphor insbesondere in Form von phosphathaltigen Verbindungen eine wichtige Aufgabenstellung.

Eine mögliche Quelle für phosphathaltige Verbindungen bilden Aschen. Aschen sind die im festen Aggregatzustand vorliegenden Rückstände aus der Verbrennungen. Insbesondere betrifft dies die Verbrennung von organischen Materials, also von fossilen Brennstoffen, Biokraftstoffen oder Lebewesen wie Pflanzen und Tieren. Sie entsteht aus dem anorganischen Teil der verbrannten Substanz und besteht somit aus einer Mischung verschiedenster Minerale. Besonders Aschen aus der Verbrennung von Klärschlämmen können als eine Ausgangsbasis für die Gewinnung von Rohstoffen, wie z.B. Pflanzennährstoffen für Düngemittel darstellen. Problematisch dabei ist, dass diese häufig eine hohe Belastung mit (Schwer-)Metallen (z.B. Kupfer, Cadmium, Zink, Mangan, Blei, Uran etc.) aufweisen.

Ein wichtiger Verfahrensschritt zur Nutzbarbarmachung von Phosphat-haltigen Verbindungen ist ihre Trennung von den Metallen/Schwermetallen in den Aschen. Eine Möglichkeit hierzu stellen Filtrationsverfahren da.

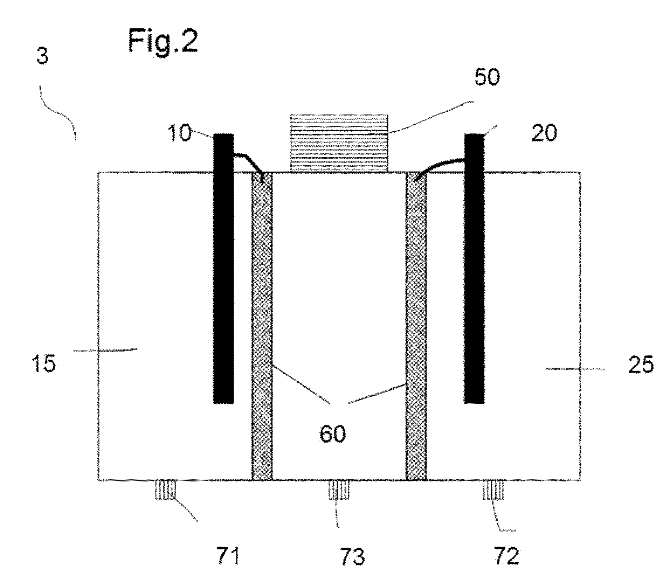

Ein aus der Analytik bekanntes Verfahren dazu ist die Elektro-Ultrafiltration (EUF) Diese wird bis jetzt überwiegend in der Bodenanalytik angewendet. Dabei werden die unterschiedlich geladenen Ionen in einer Probe im elektrischen Feld separiert. Der Vorteil der EUF Methode für die Analytik ist, dass durch die Variation von Spannung und Temperatur Messwerte erhalten werden, die es erlauben Nährstoffverfügbarkeit zu beurteilen. Die Abbildung 2 zeigt eine Vorrichtung zur Elektro-Ultrafiltration.

Nachteilig ist, dass bei üblichen EUF-Verfahren mit vollentsalztem Wasser als Lösungsmittel gearbeitet wird, damit keine störenden Fremd-Ionen vorhanden sind. Dies erlaubt zwar eine direkte Erfassung aller im Boden enthaltenen, wasserlöslichen und leicht desorbierbaren Nährstoffe und ist für die Analytik notwendig. Jedoch kann so keine Rückgewinnung von Pflanzennährstoffen im großtechnischen Rahmen erfolgen.

In den bislang vorliegenden Verfahren erfolgt die Rückgewinnung von Phosphor in den Aschen entweder über die Konvertierungstemperatur mit Zugabe von Soda, Silikat oder durch Zugabe von NaCl, KCl oder MgCl₂, wobei die Temperatur und die Zugabe von Salzen die Phosphatlöslichkeit erhöhen und die Zugabe von chloridischen Salzen Schwermetalle eliminieren. Hier sind die entstehenden Verbindungen ihrerseits z.T. problematisch.

Ein weiteres Verfahren ist die Behandlung von Abwässern mit metallischen Nanopartikeln, die Phosphat binden. Diese mit Phosphat beladenen Partikel werden dann mittels eines Magneten aus dem Abwasser gefischt. Hier sind die schwierig abzutrennenden Nanopartikel ungünstig.

Ein großer Nachteil aller bekannten Verfahren zum Gewinnung von phosphathaltigen Verbindungen ist, dass viele Produkte noch mit (Schwer-)metallen kontaminiert sind, und/oder dass diese Verfahren relativ kosten intensiv sind.

### Aufgabe

Hiervon ausgehend liegt der Erfindung die Aufgabe zugrunde, die genannten Nachteile des Standes der Technik zu vermeiden und ein einfaches und billiges einsetzbares Verfahren zur (Rück-)Gewinnung von phosphat-haltigen Verbindungen aus Asche bereitzustellen, wobei diese auch effektiv von (Schwer-)metallen befreit werden.

### Lösung der Aufgabe

Diese Aufgabe wird gelöst durch ein verbessertes Verfahren zur Gewinnung von phosphathaltigen Verbindungen aus Asche gemäß Patentanspruch 1. Hierbei handelt es sich um ein mehrstufiges Verfahren.

Es umfasst wenigstens die folgenden Schritte:
i. Zumindest teilweises Lösen der Asche mittels eines Aufschlussmittels, um eine Suspension zu erhalten
ii. Trennung der Suspension aus Schritt i) in eine flüssige Phase und in einen festen Rückstand
iii. Separation der Ionen der flüssigen Phase aus Schritt ii) nach ihrer Ladung mittels Elektro-Ultrafiltration, wobei ein Anodenfiltrat isoliert wird
iv. Fällung des Anodenfiltrats aus Schritt iii) mit einem Fällungsmittel, wobei die phosphat-haltigen Verbindungen ausgefällt werden.

In einem ersten Schritt i) wird die Asche chemisch aufgeschlossen umso eine Suspension zu erhalten, bei der alle phosphat-haltigen Verbindungen in Lösung zu bringen. Dabei wird das Aufschlussmittel mit der Asche vermengt. Dies geschieht vorzugsweise in einem geeigneten Reaktionsbehälter. Dieser ist beständig gegen das verwendete Ausschlussmittel ausgebildet. Durch die Reaktion der Asche mit dem Aufschlussmittel werden die unlöslichen Phosphorminerale in lösliche Verbindungen gelöst. Das Resultat ist eine Aufschlämmung aus einer flüssigen Phase, in der sich das Phosphatanion (H₂PO₄⁻) befindet, und einer festen Phase mit nicht gelösten Verbindungen (z.B. Silikate).

Als Aufschlussmittel werden bevorzugt Mineralsäuren wie Salzsäure, Schwefelsäure oder Salpetersäure einzeln oder in Kombination verwendet. Vorzugsweise erfolgt danach jetzt noch die Zugabe von Wasser und/oder einer Base um den pH-Wert für das weitere Verfahren einzustellen.

Der zweite Schritt ii) umfasst eine Phasentrennung der Aufschlämmung aus Schritt i) in eine flüssige Phase und in einen festen Rückstand. Ein hierzu geeignetes Verfahren ist die Cross-flow-Filtration mittels Umkehrdüsenmembranen. Andere Verfahren wären Sedimentation, Filtration oder Zentrifugation. Dies erfolgt vorzugsweise in einer Vorrichtung zur Phasentrennung wie beispielsweise einem Schlammabscheider. Die abgetrennte flüssige Phase, welche ein Gemisch aus Lösungsmittel und gelösten Substanzen umfasst, wird auch als Eluat bezeichnet.

In einem Schritt iii) erfolgt die Separation der Ionen aus dem Eluat aus Schritt ii) mittels Elektro-Ultrafiltration in einer Vorrichtung zur Elektro-Ultrafiltration. Hierbei werden die positiv geladenen Ionen von den negativ geladenen Ionen des Eluats separiert, indem sie in ein elektrisches Feld zwischen einer Anode und einer Kathode gebracht werden. Dabei passieren sie die Filter. Die positiv geladenen Ionen bilden das Kathodenfiltrat. Dieses umfasst insbesondere die nicht als Pflanzennährstoffe geeigneten Metallionen. Das Kathodenfiltrat kann zur Metallgewinnung separat weiterverarbeitet werden.

Die negativ geladenen Ionen und damit insbesondere auch Phosphat Ionen bilden das Anodenfiltrat.

In einem Schritt iv) erfolgt eine Fällung der phosphathaltigen Verbindungen durch die Zugabe eines Fällungsmittels zum Anodenfiltrat. Dies erfolgt vorzugsweise in einem Fällungsreaktor. Ein geeignetes Fällungsmittel, um die im Anodenfiltrat enthaltene Phosphat-haltigen Verbindungen auszufällen, ist Kalk (CaCO₃). Hier erfolgt die Fällung zu sekundärem oder tertiärem Ca-Phosphat. Die phosphathaltigen Verbindungen werden danach bevorzugt von den flüssigen Bestandteilen des Anodenfiltrats getrennt und gefiltert.

Die phosphathaltigen Verbindungen werden, nach einem weiteren Aspekt der vorliegenden Erfindung, im Anschluss bevorzugt für Düngemittel verwendet.

Ein weiterer Aspekt der vorliegenden Erfindung betrifft eine Vorrichtung zur Durchführung des erfindungsmäßen Verfahrens gemäß Patentanspruch 4. Diese Vorrichtung umfasst einen Behälter 100 für die Aufnahme von Asche, Behälter für den chemischen Aufschluss 1 von Asche mit einem Aufschlussmittel und ein Verbindungselement 90 dazwischen. Der Behälter für den chemischen Aufschluss 1 von Asche mit einem Aufschlussmittel ist über ein Verbindungselement 91 mit einem geeigneten Behälter 200 für die Aufnahme des Aufschlussmittels verbunden Die Vorrichtung zur Durchführung des erfindungsmäßen Verfahrens umfasst weiterhin eine Vorrichtung zur Phasentrennung 2 einer im Behälter für den chemischen Aufschluss 1 entstehenden Aufschlämmung in eine flüssige Phase und einen festen Rückstand und ein Verbindungselement 92 zwischen diesen Bauteilen. Weiterhin umfasst die Vorrichtung zur Durchführung des erfindungsmäßen Verfahrens eine Vorrichtung zur Elektro-Ultrafiltration 3, die geeignet zur Separation von Ionen einer flüssigen Phase ist. Dieses ist mit der Vorrichtung zur Phasentrennung 2 über ein Verbindungselement 93 verbunden.

Die Vorrichtung zur Elektro-Ultrafiltration 3 umfasst ihrerseits eine Anode 10, eine Kathode 20, einen Zufluss 50, einen ersten Filter 60. der zwischen dem Zufluss 50 und der Anode 10 angeordnet ist und einen zweiten Filter 60, der zwischen dem Zufluss 50 und der Kathode 20 angeordnet ist. Die eine Vorrichtung zur Elektro-Ultrafiltration 3 umfasst außerdem einen Abfluss 71 welche der Anode zugewandt angeordnet ist, einem Abfluss 73 der der Kathode 20 zugeordnet ist so einem Abfluss 72 der zwischen den beiden Filtern 60 angeordnet ist.

Weiterhin umfasst Vorrichtung zur Durchführung des erfindungsmäßen Verfahrens einen Behälter 4 für die Fällung des Anodenfiltrats Dieses ist mit der Vorrichtung zur Elektro-Ultrafiltration über ein Verbindungselement 94 verbunden.

Zur Zuleitung des Fällungsmittels in den Behälter 4 umfasst die Vorrichtung einen geeigneten Behälter 400 für die Aufnahme von Fällungsmittel und ein Verbindungselement 95. Weiterhin umfasst die Vorrichtung zur Durchführung des erfindungsmäßen Verfahrens einen Behälter 500, welcher geeignet zur Aufnahme von phosphat-haltigen Verbindungen aus einer Fällung ist. Dieser ist mit dem Behälter 4 über das Verbindungselement 96 verbunden.

Die Verbindungselemente 90,91,92,93,94,95 und 96 sind hierbei aus einem geeigneten Material (z.B. säurefestem Edelstahl) als Rohr ausgeführt.

Weiterhin umfasst die Vorrichtung zur Durchführung des erfindungsmäßen Verfahrens noch eine gesteuerte Stromversorgung für die Elektroultrafiltration sowie Mittel zur Steuerung des Stoffflusses zwischen den einzelnen Behältern und Vorrichtungen wie z.B. Ventile und Pumpen. Diese sind aus der Verfahrenstechnik bekannt.

### Abbildungsbeschreibung

Bevorzugte Ausführungsbeispiele der vorliegenden Erfindung werden nun anhand der beigefügten Zeichnungen näher erläutert.

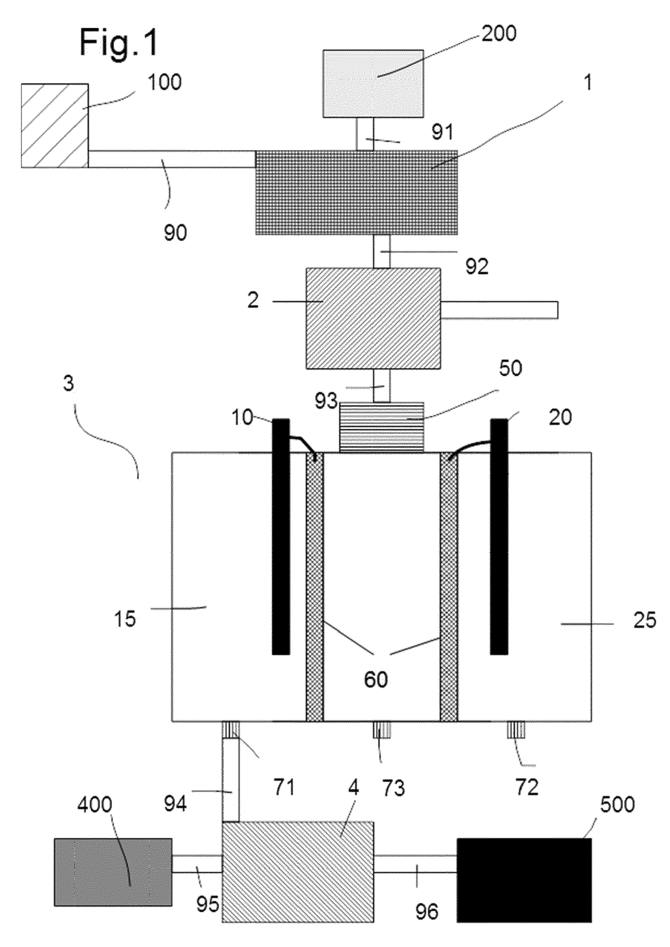

Fig. 1. zeigt wie das erfindungsgemäßen Verfahren in einer dazu geeigneten Vorrichtung abläuft

Zuerst wird eine Asche, wie beispielsweise Klärschlammasche, Pyrolysekoks von Klärschlamm aus ihrem Behälter 100 in einen geeigneten säurefesten Behälter 1 befördert. In diesem Behälter 1 wird aus einem anderen Behälter 200 ein Aufschlussmittel z.B. mit Schwefelsäure zu der Asche hinzugeben. Dann erfolgt der Verfahrensschritt i), der chemische Aufschluss der Asche. Anschließend wird diese resultierende Aufschlämmung optional mit Wasser oder einer Base (z.B. NaOH oder KOH) vermengt und in eine Vorrichtung zur Phasentrennung 2 wie bzw. einen Schlammabscheider 2 gefördert. Dort erfolgt der Verfahrensschritt ii), die Trennung der flüssige Phase mit den gelösten Ionen und Kationen von der unlöslichen festen Phase. Diese Trennung erfolgt zum Beispiel mit speziellen Umkehrdüsenmembranen (Cross-Flow Filtration).

Nach dieser mechanischen Trennung erfolgt Verfahrensschritt iii) die Trennung der Anionen und Kationen mittels einer Elektro-Ultra Filtrationsanlage 3. Die an der Anode anfallende Mischung von gelösten Substanzen bildet das sogenannte Anodenfiltrat dieses enthält das Phosphat.

Das Anodenfiltrat wird dann in einen Behälter 4 für die Fällung geleitet. Dort wird ein Fällungsmittel aus einen geeigneten Behälter 400 dazugeben um dort den Verfahrensschritt iv) durchzuführen, das ausfällen phosphat-haltigen Verbindungen. Dazu ist zum Beispiel Kalk CaCO₃ geeignet. Bei der Fällungsreaktion wird in diesem Fall das Phosphat mit dem Kalk zu CaPO₄ und Ca₂(PO₄)₃ gefällt. Dieses wird optional vor einer möglichen Weiterverarbeitung noch gefiltert und in einem geeigneten Behälter 500 gesammelt.

**Fig. 2****.** zeigt eine Vorrichtung zur Elektro-Ultrafiltration 3 aus dem Stand der Technik.

Eine Vorrichtung zur Elektro-Ultrafiltration 3 umfasst zunächst einen Zufluss 50. Über diesen Zufluss 50 erfolgt die Einleitung des Eluats mit den als Ionen vorliegenden, gelösten Phosphat-haltigen Verbindungen.

Im inneren der Elektro-Ultrafiltrationsanlage 3 finden sich eine Anode 10 und eine Kathode 20. Im elektrischen Feld zwischen dieser Anode 10 und Kathode 20 werden die verschieden geladenen Ionen separiert. Etwaige noch im Eluat verbliebene feste Rückstände werden dabei durch die Filter 60 zurückgehalten. Über die verschiedenen Abflüsse 71,72,73 verlassen nun die Ionen separiert voneinander die Elektro-Ultrafiltrationsanlage 3. Für die Gewinnung der phosphat-haltigen Verbindungen ist nur das Anodenfiltrat relevant. Das Anodenfiltrat verlässt die Elektro-Ultrafiltrationsanlage 3 über den Abfluss 71. Die (Schwer)metall-Ionen sind positiv geladen und verlassen, als Kathodenfiltrat, die Vorrichtung zur Elektro-Ultrafiltration 3 über den Abfluss 73. Sie können separat aufbereitet werden.

Die übrigen Bestandteile z.B. unlösliche Stoffe welche die Filter nicht passieren können verlassen die Vorrichtung zur Elektro-Ultrafiltration3 über den Abfluss 72. Dieser Anteil wird auch als Diluat bezeichnet.

### Bezugszeichen:

- 1: Behälter für den chemischen Aufschluss
- 2: Vorrichtung zur Phasentrennung
- 3: Vorrichtung zur Elektro-Ultrafiltration
- 4: Behälter für die Fällung
- 10: Anode
- 20: Kathode
- 50: Zufluss
- 60: Filter
- 71,72,73: Abfluss
- 100: Behälter für Asche
- 200: Behälter für Aufschlussmittel
- 400: Behälter für Fällungsmittel
- 500: Behälter für phosphat-haltigen Verbindungen

## Patentansprüche

1. Verfahren zur Gewinnung von phosphat-haltigen Verbindungen aus Asche umfassend wenigstens die folgenden Schritte:
i. Zumindest teilweises Lösen der Asche mittels eines Aufschlussmittels, um eine Suspension zu erhalten,
ii. Trennung der Suspension aus Schritt i) in eine flüssige Phase und in einen festen Rückstand,
iii. Separation der Ionen der flüssigen Phase aus Schritt ii) nach ihrer Ladung mittels Elektro-Ultrafiltration, wobei ein Anodenfiltrat isoliert wird und
iv. Fällung des Anodenfiltrats aus Schritt iii) mit einem Fällungsmittel, wobei die phosphat-haltigen Verbindungen ausfallen.

2. Verfahren nach Anspruch 1, **dadurch gekennzeichnet, dass** das Verfahren der Gewinnung wenigstens eines phosphat-haltigen Pflanzennährstoffs aus Asche dient und das Aufschlussmittel Salzsäure, Schwefelsäure und/oder Salpetersäure umfasst.

3. Verwendung von phosphat-haltigen Verbindungen hergestellt gemäß eines Verfahrens nach Anspruch 1 oder 2 als Düngemittel.

4. Vorrichtung zur Durchführung eines Verfahrens, gemäß Anspruch 1 **dadurch kennzeichnet, dass** es
• einen Behälter (100) für die Aufnahme von Asche,
• einen Behälter (1) für den chemischen Aufschluss von Asche mit einem Aufschlussmittel,
• ein Verbindungselement (90) zwischen dem Behälter (100) für die Aufnahme von Asche und dem Behälter (1) für den chemischen Aufschluss von Asche,
• einen Behälter (200) für die Aufnahme eines Aufschlussmittels,
• ein Verbindungselement (91) zwischen dem Behälter (1) für den chemischen Aufschluss von Asche mit einem Aufschlussmittel und dem Behälter (200) für die Aufnahme des Aufschlussmittels,
• eine Vorrichtung zur Phasentrennung (2) einer im Behälter (1) für den chemischen Aufschluss von Asche entstandenden Aufschlämmung in eine flüssige Phase und einen festen Rückstand,
• ein Verbindungselement (92) zwischen dem Behälter (200) für die Aufnahme von des Aufschlussmittels und der Vorrichtung zur Phasentrennung (2),
• eine Vorrichtung zur Elektro-Ultrafiltration (3), geeignet zur Separation von Ionen einer flüssigen Phase,
• ein Verbindungselement (93) zwischen der Vorrichtung zur Phasentrennung (2) und der Vorrichtung zur Elektro-Ultrafiltration (3),
• einen Behälter (4) für die Fällung von Anodenfiltrats,
• ein Verbindungselement (94) zwischen einer Vorrichtung zur Elektro-Ultrafiltration (3) und dem Behälter (4) für die Fällung des Anodenfiltrats,
• einen Behälter (400) für die Aufnahme von Fällungsmittel,
• ein Verbindungselement (95) zwischen dem Behälter (4) für die Fällung von Anodenfiltrat und dem Behälter (400) für die Aufnahme von Fällungsmittel,
• einen Behälter (500) zur Aufnahme von phosphat-haltigen Verbindungen aus einer Fällung und
• ein Verbindungselement (96) zwischen dem Behälter (4) für die Fällung von Anodenfiltrat und dem Behälter (500) zur Aufnahme von phosphat-haltigen Verbindungen aus einer Fällung umfasst.
